(19) Europäisches Patentamt
European Patent Office
Office européen des brevets

(11) **EP 4 632 572 A1**

(12) **EUROPEAN PATENT APPLICATION**

(43) Date of publication:
**15.10.2025 Bulletin 2025/42**

(21) Application number: **25167725.8**

(22) Date of filing: **01.04.2025**

(51) International Patent Classification (IPC):
**G06F 9/50** (2006.01)     **G06F 1/3203** (2019.01)
**G06F 9/455** (2018.01)     **G06F 11/34** (2006.01)
**H04L 47/83** (2022.01)     **G06F 9/48** (2006.01)

(52) Cooperative Patent Classification (CPC):
**G06F 9/5077; G06F 1/3203; G06F 9/45558;**
**G06F 9/4893; G06F 9/5072; G06F 9/5094;**
**G06F 11/3433; H04L 47/83;** G06F 11/3442;
G06F 2209/5013; G06F 2209/5014;
G06F 2209/5019; G06F 2209/504; G06F 2209/508

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH LA MA MD TN**

(30) Priority: **12.04.2024 US 202418634478**

(71) Applicant: **Microsoft Technology Licensing, LLC**
**Redmond, WA 98052-6399 (US)**

(72) Inventors:
• **Misra, Pulkit Ambikanand**
**Redmond, WA, 98052 (US)**

• **Goiri Presa, Inigo**
**Redmond, WA, 98052 (US)**
• **Choukse, Esha**
**Redmond, WA, 98052 (US)**
• **Bianchini, Ricardo G.**
**Redmond, WA, 98052 (US)**
• **Stojkovic, Jovan**
**Redmond, WA, 98052 (US)**
• **Whitlock, Sam David**
**Redmond, WA, 98052 (US)**

(74) Representative: **Grünecker Patent- und**
**Rechtsanwälte**
**PartG mbB**
**Leopoldstraße 4**
**80802 München (DE)**

(54) **DISTRIBUTED WORKLOAD AND RISK-AWARE OVERCLOCKING MANAGEMENT**

(57)     According to examples, a distributed overclocking management system implements decentralized overclocking decisions that allows servers within a rack to locally process overclocking requests of a plurality of virtual machines (VMs) hosted thereon. A Global Workload Intelligence Agent (GWIA) specifies various metrics-based and scheduled-based thresholds for overclocking the plurality of VMs. A Local Workload Intelligence Agent corresponding to a VM collects metrics of interest and based on a signal from the GWIA transmits an overclocking request to a Server Overclocking Agent (SOA) managing overclocking of servers on a rack. Based at least on a rack power budget assigned by a Global Overclocking Agent (GOA), the SOA may grant or deny the overclocking request.

*FIG. 1A*

## Description

BACKGROUND

On a cloud platform, workload refers to the amount of processing that an application or a system carries out at a given time. A workload can include any process, task, or activity, such as Virtual Machines (VMs), executed using cloud processing and memory resources. Cloud services provision resources to meet peak performance requirements. For example, many services need to keep their high-percentile latency (e.g., P99) below a predetermined Service-Level Objective (SLO). These services incur high operating costs to reserve sufficient resources for handling infrequent load spikes and leave a substantial portion of the resources underutilized or even idle for the majority of the time when their load is below its peak.

Emerging cloud paradigms, such as autoscaling and serverless computing can be used to dynamically remove and add VM instances for managing cost. However, these solutions (1) can increase the application's tail latency as booting up a new VM can take up to a few minutes, and (2) cannot be easily applied for stateful services. Hence, many applications still statically provision for infrequent load spikes. On the other hand, recent advances in processing and data center cooling technologies have enabled component overclocking (e.g., overclocking of Central Processing Unit (CPU), Graphics Processing Unit (GPU)), which includes operation beyond typical voltage and power design limits.

BRIEF DESCRIPTION OF DRAWINGS

Features of the present disclosure are illustrated by way of examples shown in the following figures. In the following figures, like numerals indicate like elements, in which:

> FIG. 1A shows an architectural diagram of components of a distributed overclocking management system implemented in a cloud environment, in accordance with an embodiment of the present disclosure;
> FIG. 1B shows the interactions between the various components of the overclocking management system shown in FIG. 1A, in accordance with an embodiment of the present disclosure;
> FIG. 2 shows a block diagram of a Global Workload Intelligence Agent (GWIA) apparatus, in accordance with an embodiment of the present disclosure;
> FIG. 3 shows a block diagram of a Local Workload Intelligence Agent (LWIA) apparatus, in accordance with an embodiment of the present disclosure;
> FIG. 4A shows a block diagram of a Server Overclocking Agent (SOA), in accordance with an embodiment of the present disclosure;
> FIG. 4B shows a flowchart of the operations performed by an SOA for managing power exhaustion, in accordance with an embodiment of the present disclosure;
> FIG. 5 shows a block diagram of a Global Overclocking Agent (GOA) apparatus, in accordance with an embodiment of the present disclosure; and
> FIG. 6 shows a flowchart of a method of computing power budgets for a plurality of servers, in accordance with an embodiment of the present disclosure.

DETAILED DESCRIPTION

For simplicity and illustrative purposes, the principles of the present disclosure are described by referring mainly to embodiments and examples thereof. In the following description, numerous specific details are set forth in order to provide an understanding of the embodiments and examples. It will be apparent, however, to one of ordinary skill in the art, that the embodiments and examples may be practiced without limitation to these specific details. In some instances, well-known methods and/or structures have not been described in detail so as not to unnecessarily obscure the description of the embodiments and examples. Furthermore, the embodiments and examples may be used together in various combinations.

Throughout the present disclosure, the terms "a" and "an" are intended to denote at least one of a particular element. As used herein, the term "includes" means includes but not limited to, the term "including" means including but not limited to.

Overclocking boosts a workload's performance and thus, provides an opportunity to handle transient load spikes in a cost-efficient manner. For example, overclocking the CPU during a service's peak time can keep the tail latency below the required SLO and save costs by reducing provisioned resources. However, overclocking is not free. If used naively, overclocking increases power consumption and can cause frequent power capping events that diminish the performance benefits. In a power capping event, the power consumption of a network component, such as a server, is capped at a certain level. Furthermore, overclocking impacts component lifetime by increasing wear out and thus, cannot be used indefinitely. As overclocking may not benefit all workloads at all times, overclocking should be used smartly to be effective. For example, overclocking the CPU of a memory-bound workload, or overclocking a workload while experiencing a low load, will not provide much benefit. Finally, providers need to protect workload SLOs when overclocking is unavailable. For example, a workload might have been under-provisioned due to reliance on overclocking, but the workload would miss its SLOs under peak load if its VMs could not be overclocked. Therefore, overclocking should be used carefully while managing the associated risks.

According to examples, the overclocking management systems disclosed herein are organized hierarchically where each controller in the hierarchical levels manages the components on its level and communicates with the controllers from upper and lower levels. The overclocking management systems include a Global Workload Intelligence Agent (GWIA), which users of a cloud platform configure with the specification of conditions under which the workloads are to be overclocked. The overclocking management systems also include a local workload intelligence agent (LWIA) for each virtual machine (VM) for collecting and sending metrics of interest to other components of the overclocking management systems, such as a server overclocking agent (SOA) to enable optimal overclocking of the VMs. The overclocking management systems also include, for each server, an SOA that enables distributed management by making local determinations of overclocking requests from the assigned VMs. Finally, the overclocking management systems include a global overclocking agent (GOA), which receives power templates and overclocking templates from the SOAs of the different servers and separates a server's power into regular power and overclock power. The GOA calculates the power headroom available to a server for overclocking and the time period of overclocking for the various VMs of the server, thereby enabling the SOA to grant or deny overclocking requests from assigned VMs.

The architectural aspects of the overclocking management systems described above embody different design principles. First, the overclocking management systems use bidirectional communication with the applications to maximize an application's benefits from overclocking. Applications can use metrics (e.g., latency, CPU utilization, etc.) or schedule-based policies to trigger overclocking, and the decisions can be made based on instance-level and deployment-level monitoring. Second, the overclocking management systems use admission control as implemented by a plurality of SOAs associated with each of the different servers and the GOA to reserve power (from the available headroom) and overclocking budget for workloads. This step provides a predictable overclocking experience for workloads because the overclocking management systems can take corrective actions, such as scale-out, if the overclocking management systems are unable to honor a reservation (e.g., due to a change in available power for overclocking).

Third, the GOA leverages the predictability in power draw for assigning heterogeneous power budgets to servers. Heterogeneous assignments may provide better performance while overclocking for power-hungry servers, without compromising on power safety. Finally, the various components of the overclocking management systems, e.g., the GWIA, the various LWIAs, the SOAs, and the GOA enable decentralized overclocking decisions for improved fault tolerance. Each server, via the corresponding SOA, can make local decisions for granting overclocking requests based on resource availability as determined from the assigned power and overclocking budgets. The SOA of a server can also perform explorations to revise inefficient assignments (e.g., due to incorrect or stale predictions). The distributed overclocking management systems and methods described herein therefore enable successful overclocking management schemes that satisfy application overclocking requirements while using the available power efficiently, and managing the impact of overclocking on component lifetime.

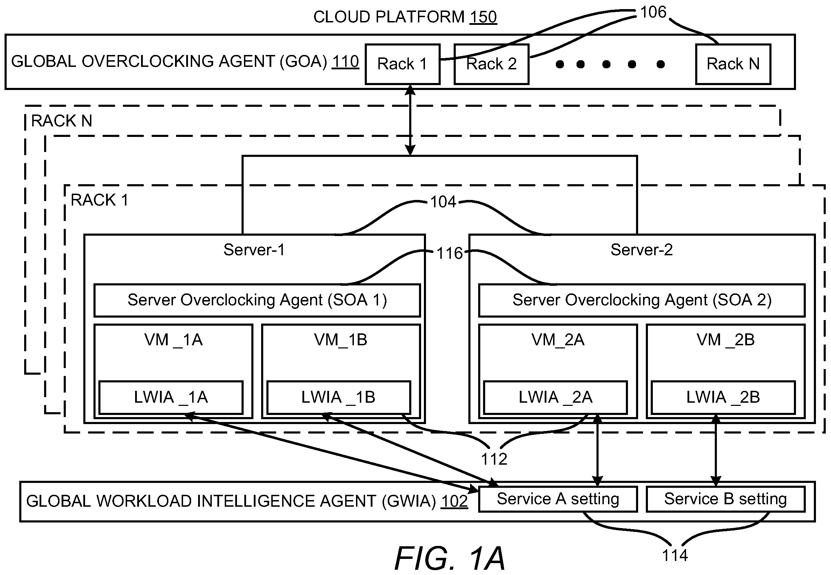

FIG. 1A shows an architectural diagram of components of an overclocking management system distributed and implemented in a cloud platform 150, in accordance with an embodiment of the present disclosure. As shown, the distributed overclocking system is organized hierarchically, where each controller in the hierarchy manages the components on its level and communicates with controllers from other levels, e.g., upper and lower levels. According to examples, the distributed overclocking system includes a Global Workload Intelligent Agent (GWIA) 102 and a plurality of servers 104, e.g., Server-1, Server-2, etc. Each of the plurality of servers 104 includes one or more cores, which are individual processing units within a CPU (Central Processing Unit), responsible for executing instructions and performing calculations.

In some examples, the plurality of servers 104 host virtual machines (VMs). For example, Server-1 hosts VM_1A, VM_1B, while Server-2 hosts VM_2A, VM_2B. Furthermore, the plurality of servers 104 are housed on a plurality of racks 106, e.g., rack 1, and rack 2. Also included in the overclocking management system is the global overclocking agent (GOA) 110. A limited number of servers, VMs, and related components are shown for brevity but it can be appreciated that any number of servers, VMs, and related components can be included on the cloud platform 150.

When deploying their services on the cloud platform 150, the workload owners may configure the GWIA 102 for their services. The configuration settings 114, e.g., Service A setting, and Service B, setting specify the conditions under which the workloads are to be overclocked. As the workloads can be composed of one or more VMs, e.g., VM_1A, VM_1B, VM_2A, etc., each VM may be deployed with its own local workload intelligence agent (LWIA), e.g., LWIA_1A on VM_1A, LWIA_1B on VM_1B, LWIA_2A on VM_2A, and LWIA_2B on VM_2B. Thus, the overclocking management system disclosed herein may include a plurality of LWIAs 112 that monitor and collect the metrics of interest from corresponding, assigned VMs and transmit them to the GWIA 102.

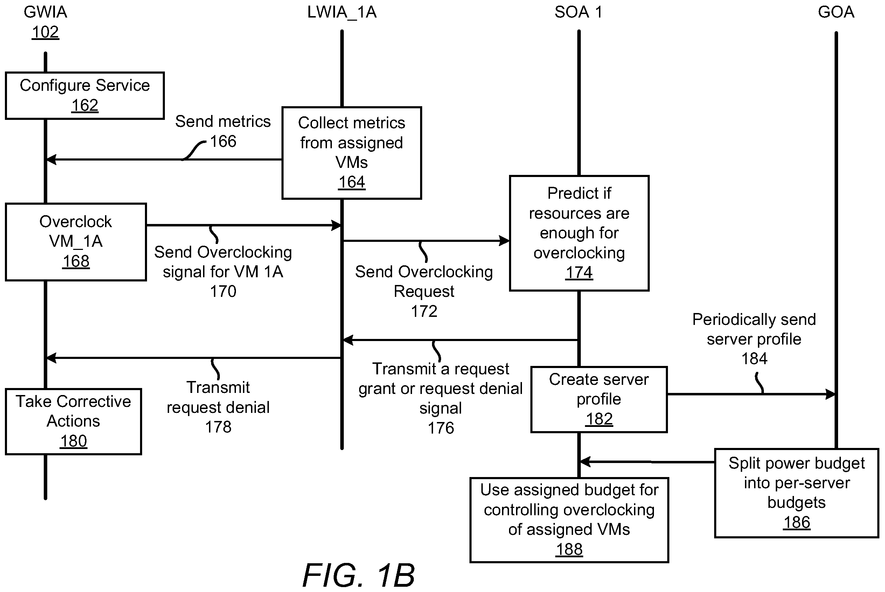

Also included in the overclocking management system are a plurality of server overclocking agents (SOAs) 116 corresponding to the plurality of servers 104. For example, SOA 1 can be associated with Server-1, SOA 2 can be associated with Server-2, etc. The interactions and exchange of data between the various components of the distributed overclocking system will be described below with reference to FIG. 1B.

FIG. 1B shows the interactions between the various components of the overclocking management system shown in FIG. 1A, in accordance with an embodiment of the present disclosure. Components, such as LWIAs, SOA, servers, etc., which are present in multiplicity in the cloud platform 150 are represented singly in FIG. 1B and it can be appreciated that the functionalities of these components discussed herein are equally applicable to other similar components. As mentioned herein, the workload owners may configure 162 the GWIA 102 for their service, e.g., Service A setting, by specifying the conditions under which the workloads can be overclocked. A workload may specify the scale-up (start) and the scale-down (stop) thresholds for overclocking the associated VMs.

The overclocking thresholds can include one or more metrics-based thresholds or schedule-based thresholds. Under metrics-based overclocking, workloads can use application metrics (e.g., tail latency, queue length, etc.) or resource utilization (e.g., CPU, network, etc.) to trigger overclocking. These metrics can be monitored per VM instance and across VM instances for specified time intervals to meet an application's goals. Additionally, workloads that have predictable times for high traffic (e.g., 9-10 AM local time, or the like) can use schedule-based thresholds. Workloads can also use a combination of metrics-based and schedule-based thresholds. Extending the autoscaling interface for overclocking enables scaling out (e.g., creating new VMs) as a fallback mechanism for when overclocking is not possible.

For example, LWIA_1A on VM_1A of the plurality of LWIAs 112 collects 164 metrics of interest from the assigned VMs. In addition, LWIA_1A sends 166 metrics of VM_1A to the GWIA 102. The GWIA 102 determines 168 if any VM (e.g., VM_1A in this instance) should be overclocked based on the metrics aggregated at a service level. If the GWIA 102 determines that VM_1A is to be overclocked, then GWIA 102 sends overclocking signals 170 to the local agents of such VM, e.g., LWIA_1A can receive the signals to overclock VM_1A from the GWIA 102. When LWIA_1A receives a signal to overclock, LWIA_1A sends an overclocking request 172 to the corresponding SOA, e.g., SOA 1. The overclocking request 172 can be submitted via a local interface, such as a hypervisor-specific shared memory implementation or locally terminated network endpoint. The SOA 1 predicts 174 if there are sufficient resources to satisfy the request. Based on the prediction outcomes, the SOA 1 transmits 176 a request grant signal or a request denial signal.

If the overclocking request 172 is denied or rejected, the local agent, e.g., LWIA_1A, transmits 178 the request denial to the GWIA 102 and the GWIA 102 takes 180 corrective actions (e.g., request scaling-out or redistributing the load towards the overclocked VMs). The plurality of SOAs 116 enable servers within a rack to locally process the overclocking requests of their VMs. On each server, the corresponding SOA uses the server's power profile to predict if the overclocking request will exceed the server's power budget. As the budget computations rely on predictions, such computations may become suboptimal. Thus, the plurality of SOAs 116 are configured to explore beyond their initially assigned budgets. Similarly, the SOA tracks the overclocking time budget of overclocked VMs and predicts if some of the VMs will run out of their budget. To avoid missed Service Level Objectives (SLOs), the SOA informs the GWIA 102 of the inability to overclock so that the GWIA 102 can take corrective actions using the configured scale-out policies.

In the background, each of the plurality of SOAs 116 monitors the power and overclocking needs of a corresponding server and creates 182 the server's profile. Particularly, each of the plurality of SOAs 116 collects a corresponding server's power draw and overclocking needs over time to create power and overclocking templates which are included in the server profile. For example, the SOA 1 may collect the power draw and overclocking needs of Server-1 over time to create power and overclocking templates for Server-1. The power template specifies the amount of power a server, e.g., Server-1, typically consumed at a given timestamp. The overclock template specifies both the number of cores that were granted overclocking and the total number of cores that requested overclocking.

The server profile including the templates is periodically (e.g., daily, weekly, monthly, etc.) sent 184 to the GOA 110 by the plurality of SOAs 116. The GOA 110 combines power and overclocking templates of the plurality of SOAs 116 and computes individual power budgets by splitting 186 the total power budget of a rack holding the servers into per-server budgets. For example, the power budget of rack 1 holding Server-1 and Server-2 is split into two budgets, one for each of Server-1 and Server-2. In an example, the GOA 110 can split the rack power budget heterogeneously amongst the plurality of servers 104. The SOA 1 uses 188 the assigned power budget for controlling overclocking of the assigned VMs on the plurality of servers 104.

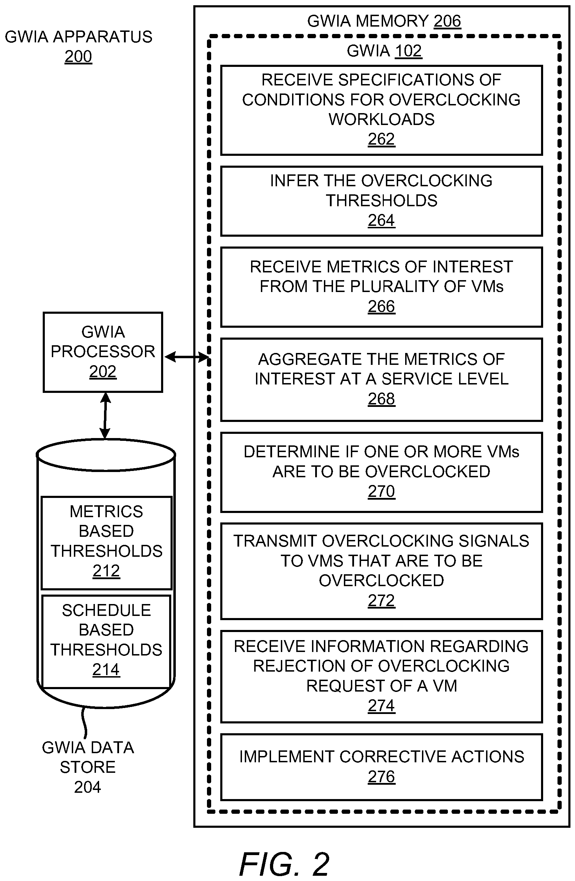

FIG. 2 shows a block diagram of a GWIA apparatus 200 or a computing device including the GWIA 102, in accordance with an embodiment of the present disclosure. The GWIA apparatus 200 includes a GWIA processor 202, a GWIA data store 204, and a GWIA memory 206. The GWIA data store 204, although shown separately, may be a part of the GWIA memory 206 in some examples. With particular reference to FIGS. 1A, 1B, and 2, the GWIA memory 206 has stored thereon machine-readable or processor-readable instructions 262-276 that the GWIA processor 202 is to execute. Although the instructions 262-276 are described herein as being stored on the GWIA memory 206 and thus include a set of machine-readable instructions, the GWIA apparatus 200 may include hardware logic blocks that may perform functions similar to the instructions 262-276. For instance, the GWIA processor 202 may include hardware components that may execute the instructions 262-276. In other examples, the GWIA apparatus 200 may include a combination of instructions and hardware logic blocks to implement or execute functions corresponding to the instructions 262-276. In any of these examples, the GWIA processor 202 may implement the hardware logic blocks and/or execute the instructions 262-276. As discussed herein, the GWIA apparatus 200 may also include additional instructions and/or hardware logic blocks such that the GWIA processor 202 may execute operations in addition to or in place of those discussed above with respect to FIG. 2.

The GWIA apparatus 200 enables users to configure services, e.g., Service A, Service B, etc., on the cloud platform 150. In particular, the GWIA processor 202 executes instructions 262 so that the users can specify conditions for overclocking workloads on a plurality of VMs, e.g., VM_1A, VM_1B, VM_2A, VM_2B, etc. The GWIA apparatus 200 extends the existing autoscaling interface with overclocking. A workload specifies the scale-up (start) and scale-down (stop) thresholds for overclocking the plurality of VMs associated therewith. The overclocking thresholds can include metrics-based thresholds 212 and/or schedule-based thresholds 214. Under the metrics-based overclocking, workloads can use application metrics (e.g., tail latency, queue length) or resource utilization (e.g., CPU resources, network resources, etc.) to trigger overclocking. The metrics can be monitored per VM or can be aggregated across multiple VMs for specified time intervals. Additionally, workloads that have predictable times for high traffic (e.g., 9-10 AM local time) can use schedule-based thresholds. Finally, workloads can also use a combination of metrics-based thresholds 212 and schedule-based thresholds 214. Furthermore, extending the autoscaling interface for overclocking enables using scaling out (e.g., creating new VMs) as a fallback mechanism when overclocking is not possible. The scale-out signal can be triggered proactively using predictions for the ability to overclock as detailed herein.

Although workload owners already carefully tune the metrics and thresholds for horizontal scaling, there is overhead in repeating the process for vertical scaling (overclocking). To ease adoption, the GWIA processor 202 can execute instructions 264 to infer the overclocking thresholds. The instructions 264 leverage workload historical data to determine scale-up values. The lifetime impact of overclocking can also be factored into the analysis. For example, P90 of historical value can be used if overclocking can be performed for 10% of the time only to comply with lifetime goals. The overclocking impact may be estimated to determine the scale-down value. Performance models using low-level architectural counters can also be used for the estimation. In an example, workload owners can also leverage the inferred thresholds as an initial estimation.

The GWIA processor 202 executes instructions 266 to receive the metrics of interest for the plurality of VMs, e.g., VM_1A, VM_1B from the corresponding LWIAs, e.g., LWIA_1A, LWIA_1B, etc. The metrics of interest can include those metrics used in determining the metrics-based thresholds 212 and schedule-based thresholds 214, such as but not limited to, tail latency, queue length, and/or resource utilization. In an example, a workload can involve multiple services and multiple VMs can implement a service. The GWIA processor 202 executes instructions 268 to aggregate the metrics of interest at a service level. Based on the service-level aggregation of the metrics of interest, the GWIA processor 202 executes instructions 270 to determine if one or more of the plurality of VMs are to be overclocked. In an example, the determination regarding overclocking of the VMs can be made by comparing the values of the metrics aggregated at the service level with metrics-based thresholds 212 and/or schedule-based thresholds 214. Based on the configuration of the different thresholds, the GWIA processor 202 can determine that one or more of the plurality of VMs are to be overclocked.

If it is determined that at least one of the plurality of VMs is to be overclocked, the GWIA processor 202 executes instructions 272 to transmit or output signals to the LWIAs of the one or more VMs that are to be overclocked. If the overclocking requests from at least one of the one or more VMs to be overclocked are rejected by the corresponding SOAs of the plurality of SOAs 116, then the GWIA processor 202 executes instructions 274 to receive information regarding the rejection of the overclocking request for at least one of the VMs. The GWIA processor 202 executes further instructions 276 to implement corrective actions in response to the overclocking request being rejected. The corrective actions can include requesting scaling-out or redistributing the load towards the overclocked VMs.

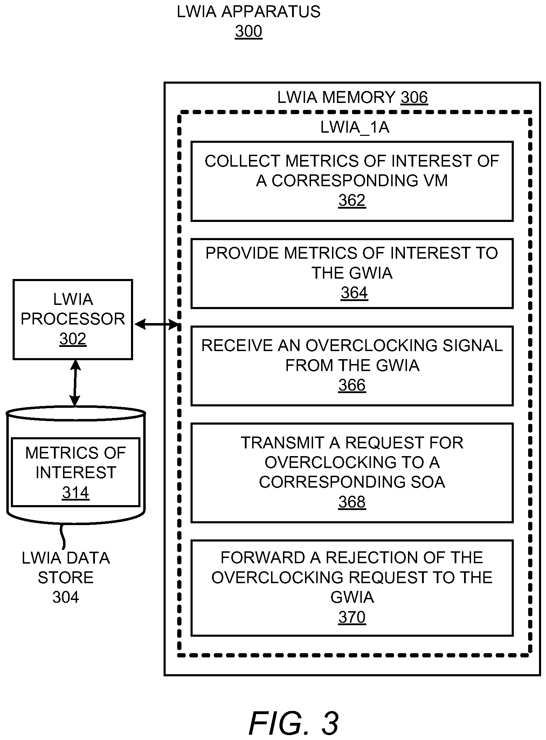

FIG. 3 shows a block diagram of an LWIA apparatus 300 including an LWIA, e.g., LWIA_1A, in accordance with an embodiment of the present disclosure. The LWIA apparatus 300 includes an LWIA processor 302 an LWIA data store 304 and an LWIA memory 306. The LWIA data store 304, although shown separately, may be a part of the LWIA memory 306. With particular reference to FIGS. 1A, 1B, and 3, the LWIA memory 306 has stored thereon machine-readable or processor-readable instructions 362-370 that the LWIA processor 302 is to execute. Although the instructions 362-370 are described herein as being stored on the LWIA memory 306 and thus include a set of machine-readable instructions, the LWIA apparatus 300 may include hardware logic blocks that may perform functions similar to the instructions 362-370. For instance, the LWIA processor 302 may include hardware components that may execute instructions 362-370. In other examples, the LWIA apparatus 300 may include a combination of instructions and hardware logic blocks to implement or execute functions corresponding to the instructions 362-370. In any of these examples, the LWIA processor 302 may implement the hardware logic blocks and/or execute the instructions 362-370. As discussed herein, the LWIA apparatus 300 may also include additional instructions and/or hardware logic blocks such that the LWIA processor 302 may execute operations in addition to or in place of those discussed above with respect to FIG. 3.

The LWIA processor 302 executes instructions 362 to monitor and collect the metrics of interest 314 of a corresponding VM, e.g., LWIA_1A collects the metrics of VM_1A. The LWIA processor 302 executes instructions 364 to provide the metrics of interest 314 of the corresponding VM to the GWIA 102. The LWIA processor 302 executes instructions 366 to receive an overclocking signal from the GWIA 102. The LWIA processor 302 executes instructions 368 to transmit an overclocking request to the corresponding SOA of the plurality of SOAs, e.g., VM_1A would transmit the overclocking request to SOA 1. The overclocking request can be submitted via a local interface, such as a hypervisor-specific shared memory implementation or locally-terminated network endpoint. If the corresponding SOA rejects the overclocking request, the LWIA processor 302 executes instructions 370 to forward the rejection of the overclocking request to the GWIA 102 thereby enabling the GWIA to take corrective actions.

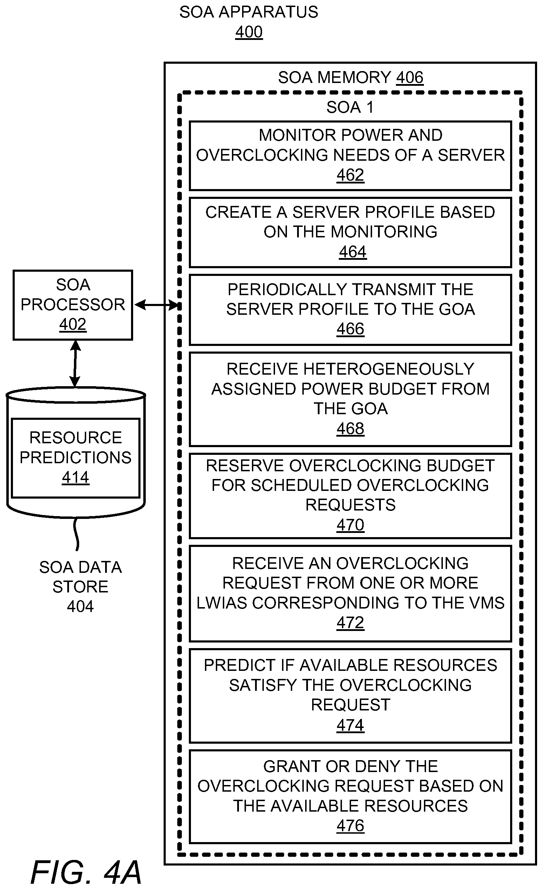

FIG. 4A shows a block diagram of a SOA apparatus 400 including an SOA, e.g., SOA 1, of the plurality of SOAs 116, in accordance with an embodiment of the present disclosure. Although depicted as part of the servers in FIG. 1A, it can be appreciated that an SOA can also be executed outside of the server and be communicatively coupled to the server to carry out the various operations described herein. The SOA apparatus 400 includes an SOA processor 402, an SOA data store 404, and an SOA memory 406. The SOA data store 404, although shown separately, may be a part of the SOA memory 406. With particular reference to FIGS. 1A, 1B, and 4A, the SOA memory 406 has stored thereon machine-readable or processor-readable instructions 462-472 that the SOA processor 402 is to execute. Although instructions 462-472 are described herein as being stored on the GWIA memory 206 and thus include a set of machine-readable instructions, the SOA apparatus 400 may include hardware logic blocks that may perform functions similar to instructions 462-472. For instance, the SOA processor 402 may include hardware components that may execute the instructions 462-472. In other examples, the SOA apparatus 400 may include a combination of instructions and hardware logic blocks to implement or execute functions corresponding to the instructions 462-472. In any of these examples, the SOA processor 402 may implement the hardware logic blocks and/or execute the instructions 462-472. As discussed herein, the SOA apparatus 400 may also include additional instructions and/or hardware logic blocks such that the SOA processor 402 may execute operations in addition to or in place of those discussed above with respect to FIG. 4A.

The SOA processor 402 executes instruction 462 to monitor the power and overclocking needs of an assigned server. For example, SOA 1 monitors the power and overclocking needs of the Server-1. The power draw of the racks and the servers in the racks is highly predictable. Hence, the SOA continuously monitors the server power consumption, which enables computing of the server power templates and overclock templates. The templates are used to predict if the additional power of overclocking will trigger a power capping event. The SOA processor 402 executes instructions 464 to create a server profile based at least on the monitoring of the power and overclocking needs of the assigned server. The SOA processor 402 executes instructions 466 to periodically transmit the server profile to the GOA 110. In an example, the instructions 462, 464, and 466 are executed as background processes.

The GOA 110 periodically sends heterogeneously assigned power budgets to each SOA of the plurality of SOAs 116. Accordingly, the SOA processor 402 executes instructions 468 to receive the heterogeneously assigned power budget from the GOA 110. Each SOA uses a prioritized feedback loop to control the power draw while overclocking. The SOA 1 executes instructions 470 to reserve overclocking budget for scheduled overclocking requests. This is because per the prioritized feedback loop scheduled overclocking VMs can be of higher priority as compared to unscheduled (metrics-based) overclocking VMs. Therefore, the overclocking budget leftover after reserving for the scheduled overclocking requests can be assigned to the metrics-based overclocking requests. In the feedback loop, an SOA changes the frequency of the overclocked VMs per priority in discrete steps (e.g., 100 MHz). Based on the impact of the last frequency change on the power draw, the SOA (1) maintains the VMs at the current frequency (if threshold ≤ draw < limit, where threshold = limit - buffer), (2) increases frequency by step size (if draw < threshold), or (3) reduces frequency by step size (if draw > limit). Prioritization enables overclocking the more important VMs to the maximum extent before less important VMs are overclocked.

The SOA processor 402 executes instructions 472 to receive an overclocking request from one or more of the LWIAs corresponding to the plurality of VMs. The SOA processor 402 executes the instructions 474 to predict if there are sufficient resources to satisfy the overclocking request. Naively granting all overclocking requests (1) increases the chance of power capping events deteriorating the performance of all of the VMs, and (2) wears out the server's components causing premature server decommissioning. An SOA performs admission control for the overclocking requests based on resource predictions 414, e.g., power and component lifetime predictions. The instructions 470 cause the SOA processor 402 to (1) predict the rack's power consumption and assess if an overclocking request will result in power capping, and (2) predict the Central Processing Unit (CPU) utilization of cores requesting overclocking and assess if the cores will exceed the allowed overclocking lifetime budget. Based on these predictions, the SOA processor 402 determines (1) if the requested power and overclocking budgets can be reserved for overclocking a schedule-based workload, or (2) for how long a given VM with metrics-based overclocking can be overclocked before taking the corrective actions. Therefore, the SOA uses the assigned budget for admission control unless the budget gets updated. Furthermore, the power budget to grant an overclocking request depends on whether the request is a scheduled request or a metrics based request. Accordingly, the SOA processor 402 executes instructions 472 to grant or deny the overclocking request based on the available resources at the assigned server which in turn may depend on the priority of the overclocking request.

Due to occasional mispredictions, the initial power budget allotment may become suboptimal-some servers consume less power than predicted while other servers are limited by their power budget and cannot overclock VMs to the maximum extent. Therefore, the plurality of SOAs 116 are allowed to explore beyond their allocated power budgets. Specifically, on a power-constrained server, the corresponding SOA tries to gradually exceed the limit. The process includes two phases: exploration and exploitation.

Exploration: The SOA conditionally increases the budget by a step size (e.g., 20W) that causes the feedback loop to start increasing the frequency of the overclocked VMs. If within a short time span (e.g., 30 seconds), the SOA does not receive any warning messages from the rack power capping system (run in the rack manager on each rack), then it further increases the budget. The SOA stops when all of the VMs on the server are overclocked to the highest frequency or when the server receives a warning message. The rack manager sends a warning message to all of the SOAs when the rack's power draw reaches a warning threshold (e.g., 95% of the rack's power limit). An SOA ignores the message if the SOA is not exploring. Otherwise, the SOA reduces its budget by the step size and uses exponential back-off for the next exploration phase.

Exploitation: After establishing a safe power budget (e.g., no warning messages), the SOA stops exploring and enters the exploitation phase. In this phase, the SOA uses the new power budget to grant the overclocking requests until either the time to exploit expires or upon receiving a power capping event. When the time to exploit expires, the SOA starts a new exploration phase if needed. On a power capping event, the SOA goes back to its initial power budget. Similarly, an SOA can explore beyond the local per-core overclocking budget. If a VM requires overclocking for longer than its assigned cores can sustain, an SOA can still start overclocking a VM on those cores until their budget is exhausted. Then, the SOA explores if any other cores on a server have enough budget to support the VM's overclocking. In that case, the SOA reschedules the VM on those cores.

When an overclocking request is rejected, the GWIA 102 takes corrective actions per a policy chosen by the cloud platform operator. A simple policy could be to scale out the workload, and the policy can factor in the number of VMs that cannot be overclocked across a deployment (e.g., create x new VMs if y existing VMs cannot be overclocked).

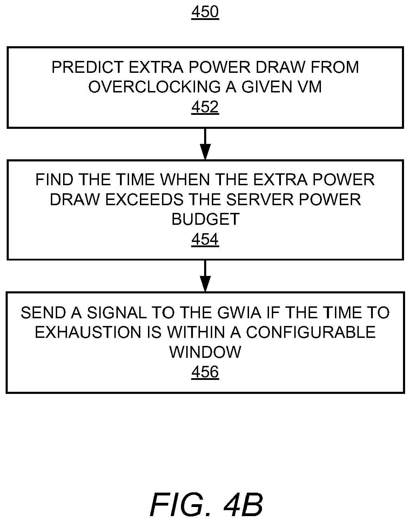

FIG. 4B shows a flowchart 450 of the operations performed by an SOA of the plurality of SOAs for managing power exhaustion, in accordance with an embodiment of the present disclosure. At 452, the SOA predicts the extra power draw from overclocking a given VM (at a given core frequency and with a given worst-case CPU utilization) on an assigned server using, for example, per-server power templates. At 454, via the power template, the SOA finds the time when the predicted extra power exceeds the server's power budget. At 456, the SOA sends a signal to the GWIA 102 if the time to exhaustion is within a configurable window (e.g., 15 minutes). To minimize the performance impact from the lack of overclocking, the length of the window is configured to be greater than the time to scale out, so that overclocking is still available for the time it takes to scale out. Finally, this operation can be performed ahead of time for scheduled overclocking requests. Like power, an SOA also predicts the time to exhaustion of the overclocking budget, which is transmitted to the GWIA 102.

It can be appreciated that although the LWIA and the SOA are shown on different apparatuses, e.g., the LWIA apparatus 300 and the SOA apparatus 400 for clarity and illustration purposes, the LWIA and the SOA can also be combined and executed on a single overclocking management apparatus as shown in FIG. 1A, in some examples.

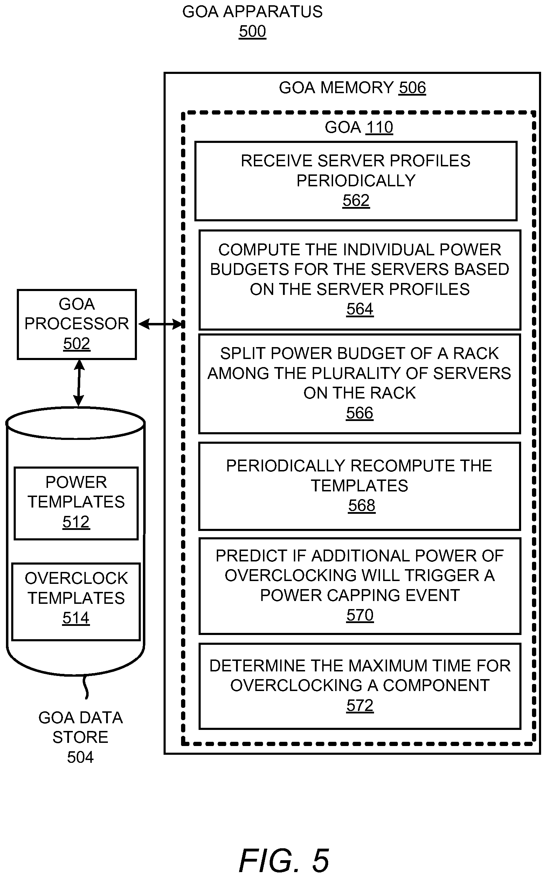

FIG. 5 shows a block diagram of a GOA apparatus 500 including the GOA 110, in accordance with an embodiment of the present disclosure. The GWIA apparatus 500 includes a GOA processor 502, a GOA data store 504, and a GOA memory 506. The GOA data store 504, although shown separately, may be a part of the GOA memory 506. With particular reference to FIGS. 1A, 1B, and 5, the GOA memory 506 has stored thereon machine-readable instructions 562-572 that the GOA processor 502 is to execute. Although the instructions 562-572 are described herein as being stored on the GOA memory 506 and thus include a set of machine-readable or processor-readable instructions, the GOA apparatus 500 may include hardware logic blocks that may perform functions similar to the instructions 562-572. For instance, the GOA processor 502 may include hardware components that may execute the instructions 562-572. In other examples, the GOA apparatus 500 may include a combination of instructions and hardware logic blocks to implement or execute functions corresponding to the instructions 562-572. In any of these examples, the GOA processor 502 may implement the hardware logic blocks and/or execute the instructions 562-572. As discussed herein, the GOA apparatus 500 may also include additional instructions and/or hardware logic blocks such that the GOA processor 502 may execute operations in addition to or in place of those discussed above with respect to FIG. 5.

The GOA processor 502 executes instructions 562 to receive server profiles periodically from the plurality of SOAs 116. In an example, the server profiles include power templates 512 and overclock templates 514 with the power and overclocking needs of the corresponding servers. The power template of a server can specify an amount of power typically consumed at a given timestamp by the server and the overclock template of the server specifies the number of cores on the server that were granted overclocking and the total number of cores of the server that requested overclocking.

The GOA processor 502 executes instructions 564 to combine the power templates 512 and the overclock templates 514 received in server profiles of the plurality of SOAs 116 to compute the individual power budgets. A power template is created using per-day or single-day aggregation of power draws across all weekdays in the prior week by a given server. The power template represents a single day and the same template is used for predictions for all days in the following week. For example, the template's value at 9 AM is the median of the rack's power consumption at 9 AM across all five weekdays. In some examples, a separate template is used for weekends. The intuition for this approach is that (1) using a coarse-grained measurement (e.g., the maximum over a week) is too conservative (i.e., it unnecessarily rejects many overclocking requests) and (2) using fine-grained measurements (i.e., all power measurements from the prior week) is insufficiently robust for outliers (e.g., holidays during the prior week). The power templates 512 may be combined by aggregating the amount of power consumed at a given timestamp by the plurality of servers assigned to the plurality of SOAs 116. The overclock templates 514 can be combined by separately aggregating the number of cores of the plurality of servers that were granted overclocking and the total number of cores of the plurality of servers that requested overclocking.

The GOA processor 502 executes instructions 566 to split the power budget of a rack among the plurality of servers that may be included on the rack. As shown in FIG. 1A Server-1, Server-2, ...etc. are shown as being included on Rack 1 and hence, the power budget of Rack 1 is distributed between Server-1 and Server-2. In an example, the power budget of a specific server may be further separated into regular power and overclock power. The further splitting into regular power for the specific server can include configuring an initial power budget of the specific server to equal regular power consumption of the specific server, while the overclock power is split among one or more VMs hosted in the specific server. The splitting of power budgets can further include configuring a SOA of the plurality of SOAs 116 with power budget limits so that the SOA rejects an overclocking request that is predicted to exceed an assigned power budget or triggers a power capping event in case a VM or a server does exceed the assigned power budget during overclocking.

The GOA processor 502 executes instructions 568 to periodically (e.g., weekly) recompute the per-rack and per-server power templates by continuously monitoring the server and rack power consumption and using the data gathered during monitoring for the re-computation. The GOA processor 502 executes instructions 570 to predict if the additional power of overclocking will trigger a power capping event on the specific server. The prediction regarding the power capping event can be based on the power template and the overclock template of the specific server.

The GOA processor 502 executes instructions 572 to determine the maximum time for overclocking a component, e.g., a VM, a CPU, etc. The maximum time to overclock a component is obtained through an offline analysis with the vendors (e.g., 10% over a 5-year period). This analysis uses realistic, yet conservative, utilization of cloud components to determine the opportunity. The duration of individual overclockings of the VMs can vary, but the GOA 110 may honor the total overclocking time assumption to comply with component lifetime goals. This requirement may be the same as for using turbo-boost on non-overclockable CPUs.

To get uniform overclocking over a component's expected lifetime, GOA 110 divides the overall budget into epochs in some examples. An epoch is configurable (e.g., a day, a week, etc.). Using a longer epoch, such as a week, enables assigning unused budgets from the weekend to the weekdays. Hence, in some examples, the GOA 110 configures an epoch to be a week and calculates per-weekday maximum overclocking time. Each of the plurality of SOAs 116 ensures that the overclocked time of a component (e.g., per-core of a CPU) does not exceed the maximum limit. The plurality of SOAs 116 use mechanisms such as but not limited to Intel (Platform Monitoring Technology (PMT) for tracking the overclocked time- and denies overclocking requests if the budget is exhausted. For a predictable overclocking experience, an SOA reserves overclocking budgets for scheduled requests. Unused budgets can be used by unscheduled (metrics-based) overclocking and also carried over to the next epoch.

With respect to FIGS. 2, 3, 4, and 5, each of the various processors, including the GWIA processor 202, the LWIA processor 302, the SOA processor 402, and the GOA processor 502, is a semiconductor-based microprocessor, a central processing unit (CPU), an application-specific integrated circuit (ASIC), a field-programmable gate array (FPGA), and/or other hardware device. The GWIA memory 206, the LWIA memory 306, the SOA memory 406, and the GOA memory 506 may each also be termed a computer-readable medium and is, for example, a Random Access memory (RAM), an Electrically Erasable Programmable Read-Only Memory (EEPROM), a storage device, or the like. In some examples, each of the memories 206, 306, 406, and 506 is a non-transitory computer-readable storage medium, where the term "non-transitory" does not encompass transitory propagating signals. In any regard, the memories 206, 306, 406, and 506 have stored thereon machine-readable instructions executable respectively by processors 202, 302, 402, and 502. Similarly, each of the data stores 204, 304, 404, and 504 may also be a Random Access memory (RAM), an Electrically Erasable Programmable Read-Only Memory (EEPROM), a storage device, or the like.

Although each of the GWIA apparatus 200, the LWIA apparatus 300, the SOA apparatus 400, and the GOA apparatus 500 are depicted as having a single processor, it should be understood that the GWIA apparatus 200, the LWIA apparatus 300, the SOA apparatus 400 and the GOA apparatus 500 may each include additional processors and/or cores without departing from a scope of GWIA apparatus 200, the LWIA apparatus 300, the SOA apparatus 400 and the GOA apparatus 500. In this regard, references to a single processor 202, 302, 402, 502 as well as to a single memory 206, 306, 406, and 506 may be understood to additionally or alternatively pertain to multiple processors 202, 302, 402, 502 and/or multiple memories 206, 306, 406, and 506. In addition, or alternatively, the GWIA processor 202 and the GWIA memory 206 may be integrated into a single component, e.g., an integrated circuit on which both the GWIA processor 202 and the GWIA memory 206 may be provided. Similar integration into a single component is also possible with the processors 302, 402, and 502 and their respective memories 206, 306, 406, and 506. In addition, or alternatively, the operations described herein as being performed by the GWIA processor 202/302/402/502 can be distributed across multiple corresponding apparatuses 200/300/400/500 and/or multiple processors 202, 302, 402, and 502.

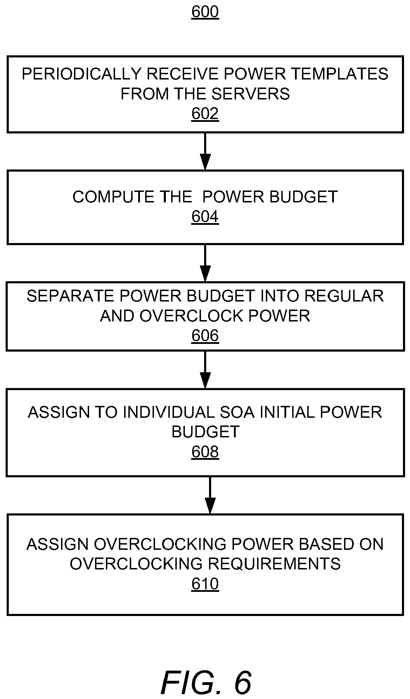

FIG. 6 shows a flowchart 600 of a method of computing power budgets for the servers, in accordance with an embodiment of the present disclosure. At 602, the GOA receives the power templates 512 of the servers periodically from the plurality of SOAs 116. At 604, the GOA combines the power templates 512 and the overclocking templates 514 of the plurality of SOAs 116 to compute the power budget in three phases as outlined below in steps 606-610. In the first phase at 606, the GOA uses a power model to separate the power budget of a given server into regular and overclock power. In an example, the number of cores from the server's overclocking template enables the GOA 110 to discriminate between the regular power and the overclocking power. In the second phase at 608, the GOA 110 assigns from the regular power to individual SOAs of the plurality of SOAs 116, an initial power budget equal to the corresponding server's regular power consumption. At 610, in the final phase, the overclocking power is split based on the overclocking requirements. The servers with more overclocked cores in the past get larger extra power budgets for the future. For example, let the two servers, Server-1 and Server-2 of rack 1, have a 1.3kW power limit. Typical power consumption without overclocking of Server-1 and Server-2 at 9AM is 400W and 300W, respectively. Thus, the unused power is 600W. In addition, at 9 AM, Server-1 and Server-2 typically need to overclock 5 cores (extra 50W) and 10 cores (extra 100W), respectively. Based on this history, the GOA 110 computes if sufficient resources are available in terms of power e.g., the power budgets for 9 AM for the two servers as shown below:

$$\text{Server-1} = 400\text{W} + \frac{50 \times 600}{50 + 100}\,\text{W} = 600\text{W}$$

$$\text{Server-2} = 300\text{W} + \frac{100 \times 600}{50 + 100}\,\text{W} = 700\text{W}$$

What has been described and illustrated herein is an example of the disclosure along with some of its variations. The terms, descriptions, and figures used herein are set forth by way of illustration only and are not meant as limitations. Many variations are possible within the scope of the disclosure, which is intended to be defined by the following claims -- and their equivalents -- in which all terms are meant in their broadest reasonable sense unless otherwise indicated.

**The following is a list of further preferred embodiments of the invention:**

> Embodiment 1. An overclocking management apparatus comprising:
>
>> at least one processor; and
>> at least one memory on which is stored:
>>
>>> at least one local workload intelligence agent (LWIA) comprising processor-readable instructions executed by the at least one processor to:
>>> forward an overclocking request based on a determination regarding overclocking of at least one assigned virtual machine (VM) hosted on a cloud platform; and
>>> at least one server overclocking agent (SOA) comprising processor-readable instructions executed by the at least one processor to:
>>>
>>>> predict if there are sufficient resources available to grant the overclocking request based on power and component lifetime predictions; and
>>>> transmit a request grant signal or a request denial signal respectively granting or denying the overclocking request based on the predictions of resource availability.

Embodiment 2. The overclocking management apparatus of embodiment 1, wherein the instructions to forward the overclocking request for the at least one assigned VM further cause the at least one processor to:

forward the overclocking request based on the determination regarding overclocking of the assigned VM made at least on either or both of schedule-based thresholds and metrics-based thresholds.

Embodiment 3. The overclocking management apparatus of embodiment 2, wherein the instructions to forward the overclocking request for the at least one assigned VM further cause the at least one processor to:

monitor metrics of interest for the at least one assigned VM, wherein the metrics-based thresholds are applicable to the metrics of interest that include at least tail latency, queue length, resource utilization; and
monitor the schedule-based thresholds during high-traffic periods.

Embodiment 4. The overclocking management apparatus of embodiment 1, wherein the at least one SOA comprises further processor-readable instructions executable by the at least one processor to:

monitor power consumption of a plurality of VMs assigned to the at least one SOA, wherein the at least one assigned VM includes the plurality of VMs; and
periodically compute a power template for the plurality of VMs, wherein the power template represents a single day aggregation of power draws by the plurality of VMs.

Embodiment 5. The overclocking management apparatus of embodiment 4, wherein the instructions to predict if there are sufficient resources to grant the overclocking request cause the at least one processor to:
predict, based at least on the power template, if additional power of overclocking the at least one assigned VM of the plurality of VMs will trigger a power capping event.

Embodiment 6. The overclocking management apparatus of embodiment 4, wherein the at least one SOA comprises further processor-readable instructions executable by the at least one processor to:

receive an assignment of individual power budget for the plurality of VMs; and
control power draws of the plurality of VMs with a prioritized feedback loop based at least on the individual power budget, wherein the individual power budget is separated into regular power and overclock power, and initial powers of the plurality of VMs equal the regular power consumed by the plurality of VMs and the overclock power is split between the plurality of VMs based on overclocking requirements.

Embodiment 7. The overclocking management apparatus of embodiment 6, wherein the instructions to transmit a request grant signal or a request denial signal respectively granting or denying the overclocking request further cause the at least one processor to:

initially reserve the overclock power for scheduled overclocking requests from the plurality of VMs; and
assign, remaining of the overclock power leftover after reserving the overclock power for the schedule overclocking requests to metrics-based overclocking requests from the plurality of VMs.

Embodiment 8. A computing device comprising:

a processor; and
a memory on which is stored processor-readable instructions that when executed by the processor, cause the processor to:

specify conditions for overclocking workloads on a plurality of Virtual Machines (VMs);
receive metrics of interest for the plurality of VMs;
aggregate the metrics of interest at a service level, wherein the workloads are associated with a plurality of services;
determine that one or more of the plurality of VMs are to be overclocked based at least on the metrics of interest aggregated at the service level; and
output a signal to overclock the determined one or more of the plurality of VMs.

Embodiment 9. The computing device of embodiment 8, wherein the instructions to output the signal to overclock the determined one or more of the plurality of VMs further cause the processor to:
transmit the signal to overclock the determined one or more of the plurality of VMs to at least one corresponding local workload intelligence agent (LWIA) of the determined one or more of the plurality of VMs that are to be overclocked.

Embodiment 10. The computing device of embodiment 9, wherein the processor-readable instructions further cause the processor to:

receive a rejection of a request to overclock at least one VM of the determined one or more VMs from the corresponding LWIA.

Embodiment 11. The computing device of embodiment 10, wherein the processor-readable instructions further cause the processor to:

implement corrective actions in response to the rejection of the request to overclock at least one VM of the determined VMs.

Embodiment 12. The computing device of embodiment 11, wherein the instructions to implement corrective actions further cause the processor to:

request scaling out or redistributing the workloads towards other overclocked virtual machines (VMs).

Embodiment 13. The computing device of embodiment 8, wherein the instructions to specify the conditions for overclocking the workloads further cause the processor to:

specify corresponding overclocking thresholds for scale-up and scale down of the plurality of VMs.

Embodiment 14. The computing device of embodiment 13, wherein the overclocking thresholds comprise one or more of schedule-based thresholds and metrics-based thresholds.

Embodiment 15. A method of distributed overclocking management implemented in a cloud platform, the method comprising:

computing, by a processor, individual power budgets for a plurality of servers of the cloud platform by combining power templates and overclock templates received in server profiles of the plurality of servers;

splitting, by the processor, a power budget of a rack bearing the plurality of servers into individual power budgets of the plurality of servers, wherein the power budget of the rack is split based at least on the corresponding server profiles;

recomputing, by the processor, the power templates and the overclock templates with periodic receipt of the server profiles; and

predicting, by the processor, if additional power for overclocking one or more VMs hosted on a specific server of the plurality of servers will trigger a power capping event on the server based on the recomputed power and overclock templates.

Embodiment 16. The method of embodiment 15, wherein the power templates of the plurality of servers specify an amount of power typically consumed at a given timestamp by the plurality of servers and the overclock templates of the plurality of servers specify a number of cores that were granted overclocking and a total number of cores that requested overclocking.

Embodiment 17. The method of embodiment 15, wherein splitting power budget of the rack into the individual power budgets of the plurality of servers further comprises:

further splitting the individual power budget of the specific server of the plurality of servers into regular power and overclock power.

Embodiment 18. The method of embodiment 17, wherein splitting power budget of the rack into the individual power budgets of the plurality of servers further comprises:

configuring an initial power budget of the specific server to equal regular power consumption of the specific server; and

splitting the overclock power among the one or more VMs hosted on the specific server.

Embodiment 19. The method of embodiment 15, wherein predicting if additional power for overclocking the one or more VMs will trigger a power capping event further comprises:

predicting power consumption of the rack including the plurality of servers.

Embodiment 20. The method of embodiment 19, wherein predicting if additional power for overclocking the one or more VMs will trigger a power capping event further comprises:

assessing if Central Processing Unit (CPU) utilization of cores requesting overclocking will exceed allowed overclocking lifetime budget.

**Claims**

1. An overclocking management apparatus comprising:

at least one processor; and
at least one memory on which is stored:
at least one local workload intelligence agent (LWIA) comprising processor-readable instructions executed by the at least one processor to:

forward an overclocking request based on a determination regarding overclocking of at least one assigned virtual machine (VM) hosted on a cloud platform; and
at least one server overclocking agent (SOA) comprising processor-readable instructions executed by the at least one processor to:

predict if there are sufficient resources available to grant the overclocking request based on power and component lifetime predictions; and
transmit a request grant signal or a request denial signal respectively granting or denying the overclocking request based on the predictions of resource availability.

2. The overclocking management apparatus of claim 1, wherein the instructions to forward the overclocking request for the at least one assigned VM further cause the at least one processor to:
forward the overclocking request based on the determination regarding overclocking of the assigned VM made at least on either or both of schedule-based thresholds and metrics-based thresholds.

3. The overclocking management apparatus of claim 2, wherein the instructions to forward the overclocking request for the at least one assigned VM further cause the at least one processor to:

monitor metrics of interest for the at least one assigned VM, wherein the metrics-based thresholds are applicable to the metrics of interest that include at least tail latency, queue length, resource utilization; and
monitor the schedule-based thresholds during high-traffic periods.

4. The overclocking management apparatus of one of claims 1 to 3, wherein the at least one SOA comprises further processor-readable instructions executable by the at least one processor to:

monitor power consumption of a plurality of VMs assigned to the at least one SOA, wherein the at least one assigned VM includes the plurality of VMs; and
periodically compute a power template for the plurality of VMs, wherein the power template represents a single day aggregation of power draws by the plurality of VMs.

5. The overclocking management apparatus of claim 4, wherein the instructions to predict if there are sufficient resources to grant the overclocking request cause the at least one processor to:
predict, based at least on the power template, if additional power of overclocking the at least one assigned VM of the plurality of VMs will trigger a power capping event.

6. The overclocking management apparatus of claim 4 or 5, wherein the at least one SOA comprises further processor-readable instructions executable by the at least one processor to:

receive an assignment of individual power budget for the plurality of VMs; and
control power draws of the plurality of VMs with a prioritized feedback loop based at least on the individual power budget, wherein the individual power budget is separated into regular power and overclock power, and initial powers of the plurality of VMs equal the regular power consumed by the plurality of VMs and the overclock power is split between the plurality of VMs based on overclocking requirements.

7. The overclocking management apparatus of claim 6, wherein the instructions to transmit a request grant signal or a request denial signal respectively granting or denying the overclocking request further cause the at least one processor to:

initially reserve the overclock power for scheduled overclocking requests from the plurality of VMs; and
assign, remaining of the overclock power leftover after reserving the overclock power for the schedule overclocking requests to metrics-based overclocking requests from the plurality of VMs.

8. A computing device comprising:

a processor; and
a memory on which is stored processor-readable instructions that when executed by the processor, cause the processor to:

specify conditions for overclocking workloads on a plurality of Virtual Machines (VMs);
receive metrics of interest for the plurality of VMs;
aggregate the metrics of interest at a service level, wherein the workloads are associated with a plurality of services;
determine that one or more of the plurality of VMs are to be overclocked based at least on the metrics of interest aggregated at the service level; and
output a signal to overclock the determined one or more of the plurality of VMs.

9. The computing device of claim 8, wherein the instructions to output the signal to overclock the determined one or more of the plurality of VMs further cause the processor to:

transmit the signal to overclock the determined one or more of the plurality of VMs to at least one corresponding local workload intelligence agent (LWIA) of the determined one or more of the plurality of VMs that are to be overclocked, preferably wherein the processor-readable instructions further cause the processor to:

receive a rejection of a request to overclock at least one VM of the determined one or more VMs from the corresponding LWIA, wherein the processor-readable instructions optionally further cause the processor to:
implement corrective actions in response to the rejection of the request to overclock at least one VM of the determined VMs.

10. The computing device of claim 9, wherein the instructions to implement corrective actions further cause the processor to:
request scaling out or redistributing the workloads towards other overclocked virtual machines (VMs).

11. The computing device of one of claims 8 to 10, wherein the instructions to specify the conditions for overclocking the workloads further cause the processor to:
specify corresponding overclocking thresholds for scale-up and scale down of the plurality of VMs, preferably wherein the overclocking thresholds comprise one or more of schedule-based thresholds and metrics-based thresholds.

12. A method of distributed overclocking management implemented in a cloud platform, the method comprising:

computing, by a processor, individual power budgets for a plurality of servers of the cloud platform by combining power templates and overclock templates received in server profiles of the plurality of servers;
splitting, by the processor, a power budget of a rack bearing the plurality of servers into individual power budgets of the plurality of servers, wherein the power budget of the rack is split based at least on the corresponding server profiles;
recomputing, by the processor, the power templates and the overclock templates with periodic receipt of the server profiles; and
predicting, by the processor, if additional power for overclocking one or more VMs hosted on a specific server of the plurality of servers will trigger a power capping event on the server based on the recomputed power and overclock templates.

13. The method of claim 12, at least one of:

wherein the power templates of the plurality of servers specify an amount of power typically consumed at a given timestamp by the plurality of servers and the overclock templates of the plurality of servers specify a number of cores that were granted overclocking and a total number of cores that requested overclocking; and
wherein predicting if additional power for overclocking the one or more VMs will trigger a power capping event further comprises:
predicting power consumption of the rack including the plurality of servers, preferably wherein predicting if additional power for overclocking the one or more VMs will trigger a power capping event further comprises:
assessing if Central Processing Unit (CPU) utilization of cores requesting overclocking will exceed allowed overclocking lifetime budget.

14. The method of claim 12 or 13, wherein splitting power budget of the rack into the individual power budgets of the plurality of servers further comprises:
further splitting the individual power budget of the specific server of the plurality of servers into regular power and overclock power.

15. The method of claim 14, wherein splitting power budget of the rack into the individual power budgets of the plurality of servers further comprises:

configuring an initial power budget of the specific server to equal regular power consumption of the specific server; and
splitting the overclock power among the one or more VMs hosted on the specific server.

FIG. 1A

GWIA
102

LWIA_1A

SOA 1

GOA

Configure Service
162

Send metrics
166

Collect metrics
from assigned
VMs
164

Overclock
VM_1A
168

Send Overclocking
signal for VM 1A
170

Send Overclocking
Request
172

Predict if
resources are
enough for
overclocking
174

Periodically send
server profile
184

Take Corrective
Actions
180

Transmit
request denial
178

Transmit a request
grant or request denial
signal
176

Create server
profile
182

Use assigned budget for
controlling overclocking
of assigned VMs
188

Split power budget
into per-server
budgets
186

*FIG. 1B*

GWIA APPARATUS
200

GWIA MEMORY 206

GWIA 102

RECEIVE SPECIFICATIONS OF
CONDITIONS FOR OVERCLOCKING
WORKLOADS
262

INFER THE OVERCLOCKING
THRESHOLDS
264

RECEIVE METRICS OF INTEREST
FROM THE PLURALITY OF VMs
266

GWIA
PROCESSOR
202

AGGREGATE THE METRICS OF
INTEREST AT A SERVICE LEVEL
268

DETERMINE IF ONE OR MORE VMs
ARE TO BE OVERCLOCKED
270

METRICS
BASED
THRESHOLDS
212

TRANSMIT OVERCLOCKING SIGNALS
TO VMS THAT ARE TO BE
OVERCLOCKED
272

SCHEDULE
BASED
THRESHOLDS
214

RECEIVE INFORMATION REGARDING
REJECTION OF OVERCLOCKING
REQUEST OF A VM
274

GWIA DATA
STORE
204

IMPLEMENT CORRECTIVE ACTIONS
276

*FIG. 2*

LWIA APPARATUS
300

LWIA MEMORY 306

LWIA_1A

COLLECT METRICS OF INTEREST OF
A CORRESPONDING VM
362

PROVIDE METRICS OF INTEREST TO
THE GWIA
364

LWIA
PROCESSOR
302

RECEIVE AN OVERCLOCKING SIGNAL
FROM THE GWIA
366

METRICS OF
INTEREST
314

TRANSMIT A REQUEST FOR
OVERCLOCKING TO A
CORRESPONDING SOA
368

LWIA DATA
STORE
304

FORWARD A REJECTION OF THE
OVERCLOCKING REQUEST TO THE
GWIA
370

*FIG. 3*

EP 4 632 572 A1

SOA APPARATUS
400

SOA MEMORY 406

SOA 1

MONITOR POWER AND
OVERCLOCKING NEEDS OF A SERVER
462

CREATE A SERVER PROFILE BASED
ON THE MONITORING
464

PERIODICALLY TRANSMIT THE
SERVER PROFILE TO THE GOA
466

RECEIVE HETEROGENEOUSLY
ASSIGNED POWER BUDGET FROM
THE GOA
468

RESERVE OVERCLOCKING BUDGET
FOR SCHEDULED OVERCLOCKING
REQUESTS
470

RECEIVE AN OVERCLOCKING
REQUEST FROM ONE OR MORE
LWIAS CORRESPONDING TO THE VMS
472

PREDICT IF AVAILABLE RESOURCES
SATISFY THE OVERCLOCKING
REQUEST
474

GRANT OR DENY THE
OVERCLOCKING REQUEST BASED ON
THE AVAILABLE RESOURCES
476

SOA
PROCESSOR
402

RESOURCE
PREDICTIONS
414

SOA DATA
STORE
404

*FIG. 4A*

18

450

```
┌─────────────────────────────────┐
│  PREDICT EXTRA POWER DRAW FROM   │
│    OVERCLOCKING A GIVEN VM       │
│              452                 │
└─────────────────────────────────┘
                 │
                 ▼
┌─────────────────────────────────┐
│  FIND THE TIME WHEN THE EXTRA    │
│   POWER DRAW EXCEEDS THE SERVER  │
│           POWER BUDGET           │
│              454                 │
└─────────────────────────────────┘
                 │
                 ▼
┌─────────────────────────────────┐
│ SEND A SIGNAL TO THE GWIA IF THE │
│  TIME TO EXHAUSTION IS WITHIN A  │
│       CONFIGURABLE WINDOW        │
│              456                 │
└─────────────────────────────────┘
```

# FIG. 4B

GOA APPARATUS
500

GOA MEMORY 506

GOA 110

RECEIVE SERVER PROFILES
PERIODICALLY
562

COMPUTE THE INDIVIDUAL POWER
BUDGETS FOR THE SERVERS BASED
ON THE SERVER PROFILES
564

SPLIT POWER BUDGET OF A RACK
AMONG THE PLURALITY OF SERVERS
ON THE RACK
566

PERIODICALLY RECOMPUTE THE
TEMPLATES
568

PREDICT IF ADDITIONAL POWER OF
OVERCLOCKING WILL TRIGGER A
POWER CAPPING EVENT
570

DETERMINE THE MAXIMUM TIME FOR
OVERCLOCKING A COMPONENT
572

GOA
PROCESSOR
502

POWER
TEMPLATES
512

OVERCLOCK
TEMPLATES
514

GOA DATA
STORE
504

*FIG. 5*

<u>600</u>

```
┌─────────────────────────────────────┐
│  PERIODICALLY RECEIVE POWER TEMPLATES │
│        FROM THE SERVERS               │
│              602                      │
└─────────────────────────────────────┘
                   │
                   ▼
┌─────────────────────────────────────┐
│      COMPUTE THE  POWER BUDGET       │
│              604                      │
└─────────────────────────────────────┘
                   │
                   ▼
┌─────────────────────────────────────┐
│   SEPARATE POWER BUDGET INTO REGULAR │
│        AND OVERCLOCK POWER            │
│              606                      │
└─────────────────────────────────────┘
                   │
                   ▼
┌─────────────────────────────────────┐
│  ASSIGN TO INDIVIDUAL SOA INITIAL POWER │
│              BUDGET                   │
│              608                      │
└─────────────────────────────────────┘
                   │
                   ▼
┌─────────────────────────────────────┐
│  ASSIGN OVERCLOCKING POWER BASED ON  │
│      OVERCLOCKING REQUIREMENTS       │
│              610                      │
└─────────────────────────────────────┘
```

*FIG. 6*

Europäisches
Patentamt

European
Patent Office

Office européen
des brevets

# EUROPEAN SEARCH REPORT

**Application Number**

EP 25 16 7725

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ALOK KUMBHARE ET AL: "Prediction-Based Power Oversubscription in Cloud Platforms", ARXIV.ORG, CORNELL UNIVERSITY LIBRARY, 201 OLIN LIBRARY CORNELL UNIVERSITY ITHACA, NY 14853, 29 October 2020 (2020-10-29), XP081801449, * figures 1,2 * * page 2, right-hand column * * page 3, left-hand column * * page 3, right-hand column * * page 6, left-hand column * * page 4, left-hand column * * page 2, left-hand column * | 1-15 | INV. G06F9/50 G06F1/3203 G06F9/455 G06F11/34 H04L47/83 G06F9/48 |
| A | US 2011/213997 A1 (KANSAL AMAN [US] ET AL) 1 September 2011 (2011-09-01) * figures 2,3,6,7 * * paragraph [0004] - paragraph [0007] * * paragraph [0098] - paragraph [0106] * * paragraph [0110] * | 1-15 | |
| A | PRATYUSH PATEL ET AL: "POLCA: Power Oversubscription in LLM Cloud Providers", ARXIV.ORG, CORNELL UNIVERSITY LIBRARY, 201 OLIN LIBRARY CORNELL UNIVERSITY ITHACA, NY 14853, 24 August 2023 (2023-08-24), XP091599345, * abstract * * page 8 * * page 9 * * Algorithm 1 * * page 11 * | 1-15 | TECHNICAL FIELDS SEARCHED (IPC) G06F H04L |

The present search report has been drawn up for all claims

| Place of search | Date of completion of the search | Examiner |
|---|---|---|
| The Hague | 11 July 2025 | Suzic, Bojan |

EPO FORM 1503 03.82 (P04C01)

## ANNEX TO THE EUROPEAN SEARCH REPORT
## ON EUROPEAN PATENT APPLICATION NO.

EP 25 16 7725

This annex lists the patent family members relating to the patent documents cited in the above-mentioned European search report.
The members are as contained in the European Patent Office EDP file on
The European Patent Office is in no way liable for these particulars which are merely given for the purpose of information.

11-07-2025

| Patent document cited in search report | Publication date | Patent family member(s) | | Publication date |
|---|---|---|---|---|
| US 2011213997 A1 | 01-09-2011 | CN | 102770826 A | 07-11-2012 |
| | | CN | 104850488 A | 19-08-2015 |
| | | EP | 2539791 A2 | 02-01-2013 |
| | | EP | 3333668 A2 | 13-06-2018 |
| | | US | 2011213997 A1 | 01-09-2011 |
| | | US | 2014351613 A1 | 27-11-2014 |
| | | WO | 2011106725 A2 | 01-09-2011 |

EPO FORM P0459

For more details about this annex : see Official Journal of the European Patent Office, No. 12/82